## Europäisches Patentamt
## European Patent Office
## Office européen des brevets

(19)

(11) Numéro de publication: **0 148 194**
**B1**

(12)
# FASCICULE DE BREVET EUROPÉEN

(45) Date de publication du fascicule du brevet:
**12.08.87**

(21) Numéro de dépôt: **84901770.2**

(22) Date de dépôt: **18.04.84**

(86) Numéro de dépôt international:
**PCT/FR 84/00110**

(87) Numéro de publication internationale:
**WO 84/04333 (08.11.84 Gazette 84/26)**

(51) Int. Cl.⁴: **C 22 B 1/00,** C 22 B 3/00,
C 22 B 11/04, C 22 B 23/04,
C 22 B 34/22, C 22 B 34/34,
C 22 B 60/02

(54) **PRETRAITEMENT A HAUTE TEMPERATURE AU MOYEN D'UNE SOLUTION AQUEUSE ALCALINE DE MINERAIS A CHANGUE ARGILEUSE CONTENANT AU MOINS UN ELEMENT VALORISABLE.**

(30) Priorité: **27.04.83 FR 8307223**
**21.09.83 FR 8315271**

(43) Date de publication de la demande:
**17.07.85 Bulletin 85/29**

(45) Mention de la délivrance du brevet:
**12.08.87 Bulletin 87/33**

(84) Etats contractants désignés:
**DE GB SE**

(56) Documents cité:
**EP-A-0 005 420**
**FR-A-360 602**
**FR-A-1 069 426**
**FR-A-1 092 946**
**FR-A-2 358 466**
**FR-A-2 379 612**
**FR-A-2 416 952**
**FR-A-2 432 554**
**FR-A-2 512 005**
**US-A-2 992 887**
**US-A-3 036 881**
**US-A-3 238 038**
**US-A-3 429 693**

**Hydrometallurgy, vol. 6, no. 1, 2 publ. in September 1980, Elsevier Scientific Publishing Co., Amsterdam (NL), J.G.H. Du Preez et al.: "The Chemistry of**

(73) Titulaire: **URANIUM PECHINEY, Tour Manhattan, La Défense 2, 6, place de l'Iris,, F-92400 Courbevoie (FR)**

(72) Inventeur: **LAMERANT, Jean- Michel, Rue de Versailles, F-13320 Bouc Bel Air (FR)**
Inventeur: **PALLEZ, François, Le Musset Bâtiment I Route de Vauvenargues, F-13100 Aix en Provence (FR)**
Inventeur: **PERSONNET, Pierre- Bernard, 2, rue des Thermes, F-13100 Aix en Provence (FR)**

(74) Mandataire: **Séraphin, Léon, PECHINEY 28, rue de Bonnel, F-69433 Lyon Cedex 3 (FR)**

(56) Documents cité: (suite)
**Uranium. Part XXVI, Alkaline Dissolution of Gold and/or Uranium Dioxid Powders", pages 147-158**

EP 0 148 194 B1

## 0 148 194

**Description**

L'invention concerne un procédé de prétraitement à haute température, au moyen d'une solution aqueuse alcaline, de minerais contenant au moins un élément valorisable, dont la gangue contient des composés argileux susceptibles de former une suspension plastique stable en présence d'eau.

Par l'expression "prétraitement", la demanderesse entend définir un traitement hydrométallurgique préalable à l'extraction du ou des éléments valorisables du minerai dans le but de conférer ultérieurement à la phase solide, en présence d'une phase liquide, une aptitude à une séparation aisée des deux phases en présence.

Par l'expression "élément valorisable", la demanderesse entend également définir tous les éléments métalliques présents dans au moins l'un des minéraux constituant le minerai argileux, susceptibles d'en être extrait en vue de sa valorisation, tels que, par exemple, l'uranium, le vanadium, le molybdène, l'or, le nickel....

Depuis longtemps déjà, il est bien connu de l'homme de l'art que des composés argileux formant la gangue de certains minerais (qu'il serait souhaitable d'exploiter) ont une réelle propension à gonfler, puis se déliter et enfin se disperser sous la forme de fins cristaux et de petits agglomérats au contact d'une phase aqueuse. Ce phénomène rend très difficile la pratique de traitements hydrométallurgiques de valorisation desdits minerais puisque la suspension obtenue devient inapte à une séparation des phases liquide et solide, aussi bien par filtration que par décantation ou peut se trouver dans un état de forte viscosité.

Les composés argileux susceptibles de former une suspension plastique stable au contact de l'eau, et fréquemment présents dans les minerais précités à gangue argileuse, peuvent appartenir aux groupes constitues par des kaolinites, telles que, par exemple, la kaolinite, la dickite, l'halloysite, les kaolinites désordonnées, les serpentines; le groupe des micas, tels que, par exemple, muscovite, biotite, et paragonite, la pirophyllite et le talc, les illites et la glauconite; le groupe des montmorillonites, telles que, par exemple, la beidéllite, la stévensite, la saponite et l'hectorite; le groupe des chlorites; le groupe des vermiculites; le groupe des argiles interstratifiées dont la structure unitaire est une combinaison des groupes précédents; le groupe des argiles fibreuses, telles que, par exemple, l'attapulgite (palygorskite), la sépiolite. Ces minerais à gangue argileuse peuvent également contenir d'autres composés tels que, par exemple, le quartz, la calcite $(CaCO_3)$, la dolomite, le gypse, la limonite $(FeO(OH)nH_2O)$ et d'autres oxydes et hydroxydes métalliques.

Si les procédés hydrométallurgiques de traitement des minerais, c'est-à-dire d'attaque des minerais, sont généralement bien connus de l'homme de l'art, il est également notoire que les minerais à gangue argileuse relèvent de traitements spécifiques adaptés à la gangue et/ou à l'élément inclus à valoriser.

La simple transposition de procédés hydrométallurgiques connus de traitement de minerais à gangue, au plus, faiblement argileuse à des minerais à gangue fortement argileuse se révèle sinon impossible du moins très difficile en raison de l'inaptitude dans laquelle se trouve la suspension résultant de l'attaque à subir une séparation de phases liquide et solide.

Parmi les procédés hydrométallurgiques de traitement de minerais, uranifères par exemple, il est connu de réaliser préférablement l'attaque alcaline oxydante du minerai d'uranium au moyen d'une solution aqueuse de carbonate et/ou bicarbonate de sodium. Cette attaque s'effectue généralement en présence d'oxygène libre insufflé dans le milieu réactionnel chaud afin de permettre l'oxydation de l'uranium, et sa solubilisation, mais également d'assurer l'oxydation des sulfures d'impuretés, et des matières organiques présentes dans le minerai.

C'est ainsi que la littérature spécialisée en la matière a décrit des modes opératoires pour la réalisation de cette attaque alcaline oxydante. (The extractive Metallurgy of Uranium, de Robert C. Merritt, édité par Colorado School of Mines Research Institute, édition 1971, page 83 et suite).

Selon un premier mode opératoire, on attaque un minerai uranifère, préférentiellement à haute teneur en carbonates, par une liqueur contenant 40 à 50 g/l de $Na_2CO_3$ et 10 à 20 g/l de $NaHCO_3$ en présence d'oxygène ou d'air insufflé dans le milieu réactionnel. Les conditions de l'attaque qui s'effectue dans un autoclave, se situent dans un domaine de températures comprises entre 95°C et 120°C, de pression totale régnante dans l'enceinte comprise entre 2 et 6,5 bars, avec des durées d'attaques qui peuvent varier entre 4 et 20 heures.

Selon un deuxième mode, le même minerai uranifère à haute teneur en carbonates est attaqué par la même liqueur, contenant 40 à 50 g/l de $Na_2CO_3$ et 10 à 20 g/l de $NaHCO_3$, en présence d'oxygène ou d'air insufflé dans le milieu réactionnel. Mais, les conditions de l'attaque qui s'effectue dans un "Pachuca" sont différentes: la température est comprise dans l'intervalle 75°C à 80°C, tandis que la pression d'injection de l'air ou de l'oxygène dans le milieu réactionnel se situe dans l'intervalle de 2 à 3 bars, pour une durée d'attaque de 96 heures.

De tels modes opératoires sont difficilement applicables quand il s'agit de réaliser l'attaque de minerais réfractaires ou encore siliceux.

C'est pourquoi le brevet FR 2 416 952 décrit un procédé d'attaque oxydante dans le but d'améliorer la cinétique et les rendements d'extraction. Il utilise une solution de bicarbonate et carbonate de sodium dans un rapport au moins égal à 1,5 , à des températures plus élevées (160 - 300°C) et des pressions aussi plus élevées allant jusqu'à 2 MPa (20 bars).

De même le brevet FR 2 432 554 décrit un procédé d'attaque alcaline oxydante utilisant les bicarbonate et carbonate de potassium dans un rapport situé entre 0 et 8, à des températures moins élevées (80°C à 160°C) et des pressions élevées allant jusqu'à 3 MPa (30 bars).

Selon un autre mode, décrit dans l'USP 3 036 881, le minerai uranifère contenant de l'uranium hexavaient est

2

attaqué pendant environ 6 heures, en présence d'oxygène, par une liqueur contenant de 4,2 g/l à 70 g/l de bicarbonate de sodium et de 40 g/l à 100 g/l de carbonate de sodium, cette attaque s'effectuant en présence d'un catalyseur d'oxydation à une température d'environ 80°C à 90°C.

De tels modes opératoires, qui se sont révélés intéressants pour l'attaque de certains minerais uranifères, sont difficilement applicables quand il s'agit de réaliser l'attaque de minerais dont la gangue est formée de composés argileux ainsi que éventuellement de composés carbonatés et sulfatés, des éléments alcalino-terreux, de même que de la silice, car l'application d'un tel procédé à un minerai à gangue argileuse conduit certes à une solubilisation correcte du métal à valoriser, mais aussi à l'obtention d'une suspension résultant de l'attaque dont il est pratiquement impossible d'assurer la séparation des phases liquide et solide, quelle que soit la quantité de floculant ajoutée, en raison de son caractère infiltrable et même indécantable.

Parmi les procédés hydrométallurgiques de traitement de minerais, certains de ces procédés décrits dans la littérature spécialisée consistent à soumettre les minerais à une attaque oxydante alcaline à températures plus élevées au moyen d'une solution beaucoup plus concentrée en bicarbonate et carbonate de sodium.

Un premier exemple peut être pris dans le brevet américain US 3 429 693. Ce brevet propose un procédé d'attaque d'un minerai de beryllium, de vanadium, de molybdène ou de tungstène au moyen d'une solution aqueuse contenant en pratique au moins 100 g/l, et pouvant atteindre plus de 500 g/l de trona (composé naturel de $Na_2CO_3$, $NaHCO_3$, $2H_2O$) pour aboutir à un bon rendement de dissolution, et à une température comprise entre 60° et 250°C pendant un temps se situant en pratique entre 90 minutes et 240 minutes. Un tel mode opératoire qui se révèle intéressant pour l'attaque de minerais à gangue non argileuse ou encore faiblement argileuse, contenant du molybdène, du vanadium, du beryllium ou du tungstène, n'est pas applicable à un minerai à gangue franchement argileuse, car, en l'absence d'une calcination préalable vers 900°C de ce minerai argileux (exemple 7 dudit brevet), il conduit à l'obtention d'une suspension à caractère plastique, résultant de l'attaque, dont il n'est pratiquement pas possible de réaliser la séparation des phases liquide et solide, quelle que soit la quantité de floculant utilisée.

Un autre exemple, extrait de la revue "Les Techniques: Industrie Minérale", publiée en Novembre 1982, concernant "les journées d'études 1982 des sections Mines et Minéralurgie", Besançon 6-7 mai 1982, par Ollivier, Thomassin et Winter, concerne un procédé de valorisation d'un minerai aurifère argileux. Ce procédé consiste à traiter le minerai par une solution aqueuse de cyanure de sodium ayant la propriété de dissoudre l'or. Comme les opérations de séparation des phases liquide et solide après attaque par filtration ou décantation conduisent soit à des temps de décantation trop longs, soit à des surfaces de filtration excessives entraînant pour l'un et l'autre cas des coûts d'investissement et d'exploitation élevés, la suspension aurifère résultant de l'attaque cyanurée est traitée au moyen de charbon actif. Ledit charbon piège l'or dissous par un procédé comparable à l'échange d'ions, le charbon aurifère de dimension de grains superieurs a ceux du minerai de la gangue stérile étant séparé par tamisage.

Dès lors que l'application de procédés classiques d'attaque à des minerais dont la gangue est formée, entre autres de composés argileux conduit certes à une solubilisation correcte du métal à valoriser, mais aussi à l'obtention d'une suspension résultant de cette solubilisation dont il est pratiquement impossible d'assurer la séparation des phases liquide et solide, en raison de son caractère infiltrable et même indécantable, quelle que soit la quantité de floculant ajoutée, la demanderesse poursuivant ses recherches a trouvé et mis au point un procédé de prétraitement à haute température de minerais à gangue argileuse, sans calcination préalable, au moyen d'une solution aqueuse alcaline, permettant une séparation ultérieure très facile des phases liquide et solide.

Le procédé selon l'invention de prétraitement à haute température au moyen d'une solution aqueuse dite de prétraitement, de minerais contenant au moins un élément métallique valorisable dont la gangue contient des composés argileux susceptibles qe former lors de l'attaque valorisante du minerai une suspension plastique stable en présence d'eau rendant pratiquement impossible la séparation ultérieure des phases liquide et solide en raison de son caractère infiltrable et/ou indécantable, se caractérise en ce que, pour provoquer une stabilisation de la gangue argileuse avant l'attaque valorisante du minerai et obtenir après l'attaque des séparations aisées des phases liquide et solide, le minerai, dont la granulométrie est au plus égale à la maille de libération du ou des métaux à valoriser et avant d'être soumis à l'attaque valorisante, est mis en contact avec une solution aqueuse de prétraitement contenant au moins $2.10^{-5}$ g/l d'ions $OH^-$ puis le milieu formé est immédiatement porté à la température minimale de prétraitement d'au moins 120°C en un temps d'au plus 30 minutes compté à partir de la mise en contact du minerai avec la solution aqueuse de prétraitement.

Comme cela est bien connu de l'homme de l'art, le minerai au moment de la mise en contact avec la solution aqueuse de prétraitement doit disposer d'une granulométrie correspondant au plus a la maille de libération du ou des éléments valorisables.

Quand le minerai ne dispose pas naturellement q'une telle granulométrie, il est soumis à une opération de broyage, préférentiellement effectuée en l'absence de tout ajout de phase aqueuse.

Dès lors que le minerai dispose de la granulométrie correspondant au plus à la maille de libération du ou des éléments à valoriser, l'écoulement des particules solides doit se faire avec une fluidité proche de celle d'un sable sec de silice.

Mais, il peut se produire que le minerai dispose avant broyage d'une quantité d'eau telle, que les particules solides après broyage aient tendance à créer des agglomérats ou granules qui empêchent le bon écoulement de ces particules. Dans ce cas, le minerai est soumis à un séchage préalable au broyage ou encore est simultanément broyé et séché de telle manière que les particules solides en résultant disposent d'une capacité d'écoulement équivalente à celle du sable sec de silice.

Comme cela a déjà été exprimé, la solution aqueuse du prétraitement selon l'invention est alcaline. Cette solution aqueuse contient des composés qui mis en contact avec de l'eau libérent des ions OH⁻. De tels composés sont par exemple, les hydroxydes alcalins, les hydroxydes alcalino-terreux tels ceux de calcium et de baryum; les carbonates alcalins tels ceux de sodium, potassium, et ammonium. Sa concentration en OH⁻ est d'au moins 2.10⁻⁵ g/l.

Selon la nature du minerai, la concentration en réactif de la solution alcaline de prétraitement peut varier dans de larges limites. Ainsi, la concentration en OH⁻ peut varier entre 2.10⁻⁵ g/l et 20 g/l, mais préférentiellement entre 2.10⁻⁴ g/l et 12 g/l.

Dès lors que le minerai et la solution agueuse de prétraitement possèdent les caractéristiques souhaitées, ils sont mis en contact formant ainsi le milieu de prétraitement qui se présente sous l'aspect d'une suspension qui est préférentiellement préparée par l'introduction de la phase solide dans la phase liquide.

Le rapport de la phase liquide exprimée en mètre cube, à la phase solide exprimée en tonne de minerai (L/S), est toujours supérieur à 1, et est préférentiellement choisi entre 2 et 10.

Selon un aménagement particulier, il peut être intéressant d'effectuer le prétraitement en un milieu plus ou moins oxydant par introduction d'un agent d'oxydation approprié.

L'agent d'oxydation peut être utilisé sous au moins l'une des formes gazeuse, liquide ou solide.

Quand il est sous la forme gazeuse, l'agent d'oxydation, qui est de l'oxygène libre, est choisi par exemple dans le groupe constitué par de l'air, de l'air enrichi en oxygène, de l'oxygène seul, de l'ozone. Son introduction par insufflation s'effectue sous une pression telle que la pression partielle d'oxygène dans le réacteur se situe dans l'intervalle 0,1 à 20 bars, mais de préférence entre 5 et 15 bars.

Quand il est sous une forme non gazeuse, l'agent d'oxydation est choisi parmi les composés oxydants connus, tels que par exemple le permanganate de potassium, les persulfates, ou l'eau oxygénée, qui peuvent être introduits sous la forme solide ou bien sous la forme d'une solution aqueuse.

Selon une variante, qui peut se révéler intéressante dans le cadre du procédé selon l'invention, du gaz $CO_2$ peut être insufflé dans le milieu réactionnel pendant que s'effectue le prétraitement, ou à l'issue du prétraitement.

Cette insufflation peut se faire d'une manière continue ou discontinue selon un débit constant ou variable. Ainsi, l'injection de ce gaz $CO_2$ permet, tout à la fois, de contrôler et d'ajuster la teneur en OH⁻ du milieu réactionnel.

La température à laquelle s'effectue le prétraitement qui est d'au moins 120°C, est dès lors, définie comme la température minimale de prétraitement; elle est préférentiellement choisie dans l'intervalle de 140°C à 300°C, selon la nature de la gangue argileuse du minerai.

La durée du prétraitement est généralement courte, étant entendu que le temps de prétraitement est d'autant plus court que la température est choisie dans les hautes valeurs de l'intervalle correspondant.

Cette durée de prétraitement se décompose en deux périodes:

- une première période dite de montée en température de la suspension jusqu'à la température minimale de prétraitement, cette periode devant être très courte: elle est choisie entre l'instantané et au plus 30 minutes, et préférentiellement entre l'instantané et au plus 20 minutes, ce temps étant compté à partir de la mise en contact du minerai avec la solution aqueuse de prétraitement.

- une deuxième période dite de séjour à au moins 120°C correspond à une durée préférentiellement choisie dans l'intervalle de 30 minutes à 1 minute et n'a pas besoin d'excéder 60 minutes, car la prolongation au-delà de 60 minutes du séjour à la température choisie au-dessus de la température minimale de prétraitement, n'améliore plus l'aptitude à la séparation ultérieure liquide et solide.

Si, toutefois la phase suivante de traitement exige une température égale ou supérieure à la température de prétraitement, la deuxième période de prétraitement peut être incluse qans la phase suivante du traitement.

Pendant la durée du prétraitement, la suspension peut être soumise à une agitation mécanique minimale mais agitation au moins suffisante pour s'opposer à la décantation des plus gros grains de la phase solide.

La demanderesse a en effet constaté, lors de nombreuses expérimentations l'ayant conduite à l'invention, que les minerais argileux mis en contact avec une phase aqueuse dont la température est inférieure à 120°C et soumis à une action mécanique prolongée d'agitation, sont très progressivement délités avec production de particules extrêmement fines, dont la plus grande dimension est généralement inférieure à deux microns, inhibant la séparation des phases solide et liquide par l'apparition d'une suspension plastique irrémédiablement stable.

Ainsi, grâce au procédé de prétraitement selon l'invention, le processus de délitage des argiles, qui se produit en présence d'une phase aqueuse, est inhibé d'une manière quasiment irréversible permettant d'effectuer par la suite et au moment opportun tout traitement ultérieur de valorisation, tel que par exemple, une attaque acide ou alcaline en réacteur du minerai à gangue argileuse prétraité, pouvant comporter sans inconvénient des étapes d'agitation, de stockage, de véhiculation et de séparation.

De plus, le procédé de prétraitement selon l'invention ne provoque pas ultérieurement de limitation des rendements de solubilisation de l'élément à valoriser, quel que soit le type de traitement pratiqué, acide ou alcalin, à basse ou à haute température.

Enfin, dans le but de faciliter la séparation des phases liquide et solide de la suspension résultant du traitement du minerai selon l'invention, il est souhaitable d'introduire un agent de floculation en solution aqueuse diluée, généralement d'une concentration au plus égale à un gramme par litre, selon des quantités ne dépassant pas 500 grammes par tonne de minerai, mais toujours adaptées aux résultats souhaités.

Les avantages qu procédé selon l'invention seront plus perceptibles grâce aux exemples donnés à titre illustratif.

## Exemple 1

Cet exemple illustre l'influence bénéfique, sur la séparation des phases liquide et solide, du prétraitement selon l'invention d'un minerai à gangue argileuse au moyen d'une solution aqueuse alcaline, et plus particulièrement la concentration minimale en $OH^-$ qu'il faut au moins atteindre pour provoquer une stabilisation de la gangue et aboutir à une séparation aisée de ces phases.

Pour ce faire, on a prétraité un minerai uranifère argileux contenant 25 % en poids d'eau et ayant après séchage, la composition pondérale suivante:

| | |
|---|---|
| U | 0,064 % |
| $SiO_2$ | 38,20 % |
| $Al_2O_3$ | 4,30 % |
| MgO | 7,40 % |
| CaO | 12,60 % |
| $Na_2O$ | 0,80 % |
| $SO_4$ | 2,90 % |
| $CO_2$ | 9,10 % |
| divers | 24,70 % |

ce minerai sec contenant en pour cent en poids:

| | |
|---|---|
| quartz | 23,0 |
| argiles | 54,0 |

Les argiles étaient essentiellement constituées de smectite, attapulgite et de sépiolite.

100 g de ce minerai sec, broyé et passant au tamis de 500 microns ont été introduits dans un autoclave cylindrique de 500 millilitres de capacité totale, avec 300 g d'une solution aqueuse alcaline de prétraitement en formant une suspension.

L'autoclave était placé dans un four électrique et soumis à des oscillations dans un plan vertical autour de son axe horizontal transversal.

La suspension était très rapidement portée à la température choisie de 180°C en 3 minutes, et était maintenue à cette température pendant 30 minutes.

Au bout de ce temps, le réacteur était immergé dans de l'eau froide afin de provoquer un refroidissement rapide de la suspension. Après refroidissement à la température de 60°C, la suspension ainsi prétraitée était soumise à un test de séparation qui consistait à faire passer la suspension sur un filtre Büchner en pratiquant un vide de 67 kPa (500 millimètres de mercure) et à mesurer ainsi la vitesse de séparation de la phase liquide en mètre $^3$x heure $^{-1}$x mètre $^{-2}$.

Afin de vérifier l'efficacité du prétraitement, c'est-à-dire de s'assurer que la gangue argileuse du minerai a bien été stabilisée dans un état physique propice à une séparation aisée ultérieure des phases liquide et solide, la phase solide recueillit sur Büchner à la fin du prétraitement était soumise à un test de dégradation en présence d'une solution aqueuse carbonatée.

Le test de dégradation consistait à introduire le gâteau provenant du prétraitement dans un réacteur cylindro-hémisphérique en acier inoxydable avec une solution aqueuse de dégradation contenant 20 g/l de $Na_2CO_3$ selon un rapport des phases liquide et solide exprimées en grammes égal à 3.

Le réacteur, qui avait une capacité de 2 litres, était muni d'une turbine à axe vertical, comportant 3 pales verticales, tournant à 375 tours par minute.

Le milieu réactionnel était alors porté à la température de 80°C, puis maintenu à cette température pendant une heure, toutes ces opérations s'effectuant sous violente agitation.

A l'issue de ce traitement de dégradation, la suspension était soumise à nouveau à un test de séparation sur le filtre Büchner en pratiquant encore un vide de 67 kPa (500 millimètres de mercure), en mesurant la vitesse de séparation de la phase liquide en mètre $^3$x heure $^{-1}$x metre $^{-2}$.

Neuf essais ont été réalisés selon le protocole précité de prétraitement et de dégradation. Pour chacun de ces essais, la solution aqueuse de prétraitement était spécifique.

L'essai 1 consistait à utiliser de l'eau permutée comme solution aqueuse de prétraitement.

L'essai 2 était réalisé en faisant usage d'une solution aqueuse de prétraitement contenant 50 g/l de $Na_2SO_4$ donnant une concentration de $2.10^{-6}$ g/l de $OH^-$.

L'essai 3 était effectué en utilisant comme solution de prétraitement une solution aqueuse de NaCl à 50 g/l donnant une concentration en $OH^-$ de $2.10^{-6}$ g/l.

L'essai 4 était réalisé par usage d'une solution de prétraitement contenant 50 g/l de $HNaCO_3$, donnant une concentration de $2.10^{-5}$ g/l en $OH^-$.

L'essai 5 mettait en oeuvre une solution aqueuse de prétraitement contenant 50 g/l de $Na_2CO_3$ donnant une

concentration en OH⁻ de $5.10^{-4}$ g/l.

L'essai 6 était conduit en utilisant une solution de prétraitement contenant 10 g/l de KOH donnant une concentration de $2.10^{-3}$ g/l en OH⁻.

L'essai 7 était effectué en utilisant comme solution de prétraitement, une solution aqueuse d'ammoniaque à 20 g/l de $NH_3$ donnant une concentration en OH⁻ de $2.10^{-2}$ g/l.

L'essai 8 était réalisé à partir d'une solution aqueuse de prétraitement saturée en $Ca(OH)_2$ donnant une concentration en OH⁻ de $5,4.10^{-1}$ g/l.

L'essai 9 était conduit en utilisant une solution aqueuse de prétraitement contenant 50 g/l de NaOH donnant une concentration en OH⁻ de 15 g/l.

Les suspensions résultant du prétraitement et du test de dégradation dans chacun des essais précités, ont été adjuvantées au moyen d'un agent de floculation.

Dans les essais 1 à 7, chaque suspension a reçu sous agitation 20 cm³ d'une solution à 0,5 g/l de Floerger FA 10, préparée à partir d'une solution aqueuse à 2,5 g/l.

Dans les essais 8 et 9, chaque suspension a reçu sous agitation 20 cm³ d'une solution à 0,5 g/l de Magnafloc 455, préparée à partir d'une solution aqueuse à 2,5 g/l.

Les vitesses de filtration ont été consignées dans le tableau I ci-après.

**Tableau I**

| Essai n° | Concentration en OH⁻ g/l de la solution de prétraitement | Vitesse de filtration en $m^3.h^{-1}.m^{-2}$ | |
|---|---|---|---|
| | | après prétraitement | après test de dégradation |
| 1 | $2.10^{-6}$ | 0,06 | 0,06 |
| 2 | $2.10^{-6}$ | 0,21 | 0,13 |
| 3 | $2.10^{-6}$ | 0,85 | 0,11 |
| 4 | $2.10^{-5}$ | 1,1 | 0,35 |
| 5 | $5.10^{-4}$ | 6,9 | 6,2 |
| 6 | $2.10^{-3}$ | 6,7 | 6,1 |
| 7 | $2.10^{-2}$ | 7,4 | 7,5 |
| 8 | $5,4.10^{-1}$ | 10,1 | 9,9 |
| 9 | 15,0 | 8,9 | 8,9 |

Ce tableau révèle que d'une part, un prétraitement d'un minerai argileux au moyen d'une solution aqueuse de très faible alcalinité ne stabilise pas la gangue argileuse (essais 1 à 3), car le test alcalin de dégradation pratiqué après le prétraitement, détériore la capacité de séparation des phases liquide et solide, et que d'autre part, l'alcalinité de la solution aqueuse de prétraitement doit être d'au moins $2.10^{-5}$ g/l pour conduire à une filtrabilité industriellement acceptable (essai 4) et d'une stabilisation favorable de la gangue argileuse (essais 5 à 9) par le prétraitement.

Ce tableau révèle également que la concentration en OH⁻ dès lors qu'elle devient élevée (essai 9) ne provoque plus d'amélioration substantielle dans la séparation des phases et/ou la stabilisation de la gangue argileuse.

**Exemple 2**

Cet exemple concerne et illustre le prétraitement selon le procédé de l'invention, d'un minerai à gangue argileuse fortement kaolinitique, suivi d'une attaque selon un procédé d'attaque appartenant à l'art antérieur.

Dans ce but, on a fait usage d'un minerai urano-vanadifère qui avait à sec la composition suivante exprimée en pour cent en poids:

| U | 0,045 |
| V | 0,025 |
| $Al_2O_3$ | 34,10 |
| $Fe_2O_3$ | 0,95 |
| $TiO_2$ | 2,19 |
| $SiO_2$ | 48,40 |
| eau de constitution et divers | 14,29 |

Une analyse par diffraction aux rayons X a montré que la fraction argileuse de la gangue contenait environ 82 % de kaolinite.

100 g de ce minerai sec, passant au tamis de 500 microns ont été introduits dans un autoclave avec 300 millilitres d'une solution de NaOH à 10 g/l, donnant une concentration en $OH^-$ de 4,2 g/l.

L'autoclave utilisé (SOTELEM) était en acier inoxydable et avait une capacité de 2 litres. Il était muni d'une turbine à axe vertical, comportant 3 pales verticales, tournant à 150 tours par minute.

Le milieu aqueux était porté à 180°C en 5 minutes et maintenu à cette température pendant 30 minutes.

Au bout de ce temps, la suspension était refroidie à 95°C, puis soumise à l'injection de $CO_2$ jusqu'à ce que la totalité de NaOH encore présente soit transformée en $HNaCO_3$, et était enfin maintenue à cette température pendant 2 heures à 95°C.

La suspension obtenue, à laquelle étaient ajoutes sous agitation, 20 $cm^3$ d'une solution à 0,5 g/l de floculant (Floerger FA 10) préparée à partir d'une solution aqueuse à 2,5 g/l, était soumise à une séparation liquide-solide sur filtre Büchner, sous un vide de 67 kPa (500 millilitres de mercure).

La vitesse de filtration mesurée était de 2,5 $m^3.h^{-1}.m^{-2}$, tandis que les rendements de solubilisation étaient de 96 % pour l'uranium et de 76 % pour le vanadium.

A titre de comparaison, le même minerai a été soumis au même procédé d'attaque que celui pratiqué précédemment, mais en l'absence du prétraitement selon l'invention.

Pour cela, 100 g dudit minerai sec, passant au tamis de 500 microns ont été introduits dans le même autoclave avec 300 millilitres d'une solution bicarbonatée contenant 21 g/l de $NaHCO_3$. Le milieu aqueux était porté à 95°C et maintenu à cette température pendant 2 heures. La suspension obtenue à laquelle était ajouté le même floculant que précédemment en une quantité identique, était soumise à une séparation liquide-solide sur filtre Büchner sous un vide de 67 kPa (500 mm de mercure).

La vitesse de filtration mesurée était de 0,13 $m^3.h^{-1}.m^{-2}$.

Ainsi, la seule application d'un procédé d'attaque de l'art antérieur à un minerai à gangue fortement argileuse, conduit à une séparation difficile des phases liquide et solide, alors que l'application du procédé selon l'invention avant l'attaque du minerai provoque une séparation aisée des phases après l'attaque dudit minerai.

## Exemple 3

Cet exemple illustre les effets relativement compensateurs des paramètres concentration en $OH^-$ de la solution de prétraitement et temps de maintien en palier à la température de prétraitement quand l'un et l'autre de ces paramètres se situent dans les limites des intervalles choisis.

Dans ce but, on a traité le même minerai que dans l'exemple 1, au sein du même autoclave cylindrique de 500 millilitres de capacité totale, chauffé qans un four électrique soumis à des oscillations qans un plan vertical autour de son axe transversal horizontal.

Deux essais ont été réalisés dans ledit autoclave en introduisant pour chacun d'entre eux 100 g du minerai séché et passant au tamis de 500 microns, et 300 millilitres d'une solution aqueuse contenant du bicarbonate et carbonate de sodium dans un rapport massique de 0,86.

Pour le premier essai (essai 10), la solution aqueuse de prétraitement contenait 25,8 g/l de $NaHCO_3$ et 30 g/l de $Na_2CO_3$ donnant une concentration en $OH^-$ de $2,7.10^{-4}$ g/l.

Pour le deuxième essai (essai 11) la solution aqueuse de prétraitement contenait 8,6 g/l de $NaHCO_3$ et 10 g/l de $Na_2CO_3$ donnant une concentration de $2,7.10^{-5}$ g/l en $OH^-$.

Pour chaque essai, la suspension était très rapidement portée à la température choisie de 180°C en 3 minutes, et était maintenue à cette température pendant 5 minutes pour l'essai 10 et 30 minutes pour l'essai 11.

Au bout de ce temps, le réacteur était immergé dans de l'eau froide afin de provoquer un refroidissement rapide de la suspension. Après refroidissement à la température de 60°C, la suspension ainsi prétraitée était soumise au test de séparation qui consistait à faire passer la suspension sur le filtre Büchner en pratiquant un vide de 67 kPa (500 millimètres de mercure), et à mesurer ainsi la vitesse de séparation de la phase liquide en $m^3.h^{-1}.m^{-2}$.

Pour vérifier l'efficacité du prétraitement, c'est-à-dire pour s'assurer que la gangue argileuse du minerai a bien été stabilisée dans un état physique propice à une séparation ultérieure aisée des phases liquide et solide, la phase solide recueillie sur Büchner a l'issue qu prétraitement était soumise au test de dégradation en présence de la solution carbonatée précitée.

7

Ce test de dégradation consistait à introduire le gâteau provenant du prétraitement dans le réacteur cylindro-hémisphérique en acier inoxydable, décrit dans l'exemple 1, avec une solution aqueuse contenant 20 g/l de $Na_2CO_3$, selon le rapport des phases liquide et solide exprimées en grammes, égal à 3.

Le millieu réactionnel était alors porte à la température de 60°C, puis maintenu à cette température pendant 1 heure, toutes ces opérations s'effectuant sous violente agitation.

A l'issue de ce traitement de dégradation, la suspension était soumise à nouveau au test de séparation sur le filtre Büchner en pratiquant encore le vide de 67 kPa (500 millimètres de mercure), en mesurant la vitesse de séparation de la phase liquide en $m^3.h^{-1}.m^{-2}$.

Les suspensions résultant du prétraitement et du test de dégradation dans les deux essais précités ont reçu un agent de floculation à raison de 20 $cm^3$ de la solution à 0,5 g/l de Floerger FA 10 préparée à partir d'une solution aqueuse à 2,5 g/l.

Les résultats expérimentaux ont été rassemblés dans le tableau II ci-après.

**Tableau II**

| Essai n° | Concetration en $OH^-$ g/l de la solution de prétraitement | Temps en minute de maintien de la température à 180°C | Vitesse de filtration en $m^3.h^{-1}.m^{-2}$ | |
|---|---|---|---|---|
| | | | après prétraitement | après test de dégradation |
| 10 | $2,7.10^{-4}$ | 5 | 2,4 | 2,6 |
| 11 | $2,7.10^{-5}$ | 30 | 1,8 | 1,9 |

Ainsi, ce tableau confirme que l'alcalinité de la solution de prétraitement doit être d'au moins 2.10 g/l, si l'homme de l'art souhaite stabiliser la gangue argileuse du minerai par le prétraitement. Une faible augmentation de l'alcalinité au-delà de ce seuil limite inférieur, procure une amélioration sensible de la filtrabilité, même pour des temps très courts de prétraitement (essai 10).

**Exemple 4**

Cet exemple met en exergue la relative et faible influence de la prolongation du temps consacré à l'opération de dégradation quand ce test est pratiqué après l'application du procédé selon l'invention.

Pour ce faire, on a utilisé un minerai urano-vanadifère à gangue argileuse qui avait à sec, la composition suivante en pour cent en poids:

| | |
|---|---|
| U | 0,117 |
| V | 0,034 |
| $Al_2O_3$ | 6,6 |
| CaO | 11,6 |
| $Fe_2O_3$ | 3,0 |
| $K_2O$ | 1,0 |
| MgO | 9,1 |
| $Na_2O$ | 1,3 |
| $SiO_2$ | 32,0 |
| $TiO_2$ | 0,7 |
| $CO_2$ | 9,95 |
| Cl | 1,78 |
| $SO_3$ | 1,02 |
| $H_2O$ de liaison et divers | 21,79 |

100 g de ce minerai sec et broyé, passant au tamis de 500 microns ont été introduits dans l'autoclave de 500 millilitres décrit dans l'exemple 1, avec 300 millilitres d'une solution aqueuse alcaline de recyclage d'un procédé d'attaque dudit minerai, destinée à être utilisée comme solution aqueuse de prétraitement. Cette solution avait la composition suivante:

| | |
|---|---|
| $Na_2CO_3$ | 30,0 g/l |
| $NaHCO_3$ | 23,4 g/l |
| $Na_2SO_4$ | 75,0 g/l |
| NaCl | 10,0 g/l |

et donnait une concentration en $OH^-$ de $0,30.10^{-3}$ g/l.

L'autoclave était placé dans un four électrique et soumis à des oscillations dans un plan vertical autour de son axe horizontal transversal.

La suspension était portée d'abord à la température choisie de 140°C en 21 minutes, puis a la temperature de 220°C en 16 minutes et maintenue à cette dernière température pendant 5 minutes.

Au bout de ce temps, le réacteur était immergé dans de l'eau froide afin de provoquer un refroidissement rapide de la suspension. Après refroidissement à la température de 60°C, la suspension a reçu un agent de floculation, par ajout de 20 $cm^3$ d'une solution à 0,5 g/l de Floerger FA 10, préparée à partir d'une solution aqueuse à 2,5 g/l. Après refroidissement à la température de 60°C, la suspension ainsi prétraitée était soumise au test de séparation qui consistait à faire passer la suspension sur le filtre Büchner en pratiquant un vide de 67 kPa (500 millimètres de mercure), et à mesurer ainsi la vitesse de séparation de la phase liquide en $m^3.h^{-1}.m^{-2}$. Cette vitesse était de 10,8 $m^3.h^{-1}.m^{-2}$.

Afin de s'assurer de l'efficacité du prétraitement, c'est-à-dire de vérifier que la gangue a bien été stabilisée dans un état favorable à une séparation aisée des phases liquide et solide, la phase solide recueillie sur Büchner à l'issue du prétraitement, a été soumise au test de dégradation, décrit dans l'exemple 1, en présence d'une solution aqueuse carbonatée.

La phase solide provenant du prétraitement était introduite dans le réacteur cylindro-hémisphérique en acier inoxydable avec la solution aqueuse de dégradation contenant 20 g/l de $Na_2CO_3$ selon le rapport des phases liquide et solide exprimées en masse, égal à 3.

Le réacteur était muni de la turbine à axe vertical, comportant 3 pales verticales dont il a été fait mention dans l'exemple 1.

Le milieu réactionnel était alors porté à la temperature de 60°C, puis maintenu à cette température pendant un temps propre à chaque essai, toutes ces opérations s'effectuant sous une agitation spécifique.

A l'issue de ce traitement de dégradation, la suspension était soumise à nouveau à un test de séparation sur le filtre Büchner en pratiquant encore un vide de 67 kPa (500 millimètres de mercure), en mesurant la vitesse de séparation qe la phase liquide en $m^3.h^{-1}.m^{-2}$.

Trois essais ont été réalisés: deux (essais 12 et 13) selon le protocole précité faisant chacun usage de la moitié du gâteau recueilli après le prétraitement, et un (l'essai 14), essai témoin, n'ayant subi que le traitement de dégradation, c'est-à-dire n'ayant pas été soumis au prétraitement selon l'invention.

L'essai 12, consistait à introduire la moitié de la phase solide résultant du prétraitement dans la solution carbonatée de dégradation, puis à porter la suspension obtenue à la température de 60°C et à la maintenir pendant 3 heures et 30 minutes, tout en agitant le milieu au moyen de la turbine qui tournait à 150 t/mn.

L'essai 13, comportait l'introduction de l'autre moitié de la phase solide résultant du prétraitement dans la solution carbonatée de dégradation, puis à porter la suspension obtenue à la même température de 60°C et à la maintenir pendant 23 heures, tout en pratiquant une agitation du milieu au moyen de la turbine qui tournait à 375 t/mn.

L'essai 14, essai témoin, consistait à faire subir le même test de dégradation à 100 g du minerai sec précité, sans qu'il ait subi un prétraitement, en lui appliquant le même protocole que l'essai 12.

Pour chaque essai, les suspensions résultant du prétraitement ou du test de dégradation ont été adjuvantées au moyen d'un agent de floculation (Floerger FA 10) introduit en une quantité suffisante pour provoquer une floculation permettant la séparation des phases liquide et solide. Ce floculant était introduit sous la forme d'une solution aqueuse à concentration de 0,5 g/l.

Tous les résultats ont été réunis dans le tableau III ci-après.

**Tableau III**

| Essai n° | Test de dégradation | | Quantité de flo-culant en gramme par tonne de minerai | Vitesse de filtra-tion en $m^3.h^{-1}.m^{-2}$ après dégradation |
|---|---|---|---|---|
| | Temps de main-tien à 60°C | Vitesse d'agitation t/mn | | |
| 12 | 3 h et 30 mn | 150 | 164 | 8,9 |
| 13 | 23 h | 375 | 271 | 5,6 |
| 14 | 3 h et 30 mn | 150 | 290 | 0,07 |

Ce tableau révèle qu'une fois le prétraitement selon l'invention réalise, la gangue argileuse du minerai est stabilisée, même pour un test de dégradation long et violent. Il révèle également qu'un minerai argileux même court et moderé.

**Exemple 5**

Cet exemple se propose de mettre en évidence le seuil de température minimale de prétraitement conduisant ultérieurement à une séparation aisée des phases liquide et solide.

Pour cela, on a utilisé le minerai dont la composition a été décrite dans l'exemple 1.

100 g de ce minerai sec et broyé, passant au tamis de 500 microns, ont été introduits dans l'autoclave de 500 millilitres, décrit dans l'exemple 1, avec 300 millilitres d'une solution aqueuse alcaline de recyclage d'un procédé d'attaque dudit minerai, destinée à être utilisée comme solution aqueuse de prétraitement. Cette solution avait la composition suivante:

| | |
|---|---|
| $Na_2CO_3$ | 30,0 g/l |
| $NaHCO_3$ | 23,4 g/l |
| $Na_2SO_4$ | 75,0 g/l |
| NaCl | 10,0 g/l |

et donnait une concentration en $OH^-$ de $0,30.10^{-3}$ g/l.

L'autoclave était placé dans un four électrique et soumis à des oscillations comme cela a été décrit dans les exemples précédents.

La suspension était rapidement portée, en 3 minutes, à une température choisie, puis maintenue à cette même température pendant 30 minutes.

L'autoclave était ensuite refroidi à 60°C par immersion dans de l'eau froide.

La suspension était enfin soumise au test de filtration sur filtre Büchner sous vide de 67 kPa (500 millimètres de mercure), afin de mesurer la vitesse de separation de la phase liquide en $m^3.h^{-1}.m^{-2}$.

Les résultats de ces essais à diverses temperatures de palier ont été réunis dans le tableau IV ci-après.

**Tableau IV**

| Essai n° | Température de palier (30 mn) en °C | Vitesse de séparation de la phase liquide en $m^3.h^{-1}.m^{-2}$ |
|---|---|---|
| 15 | 80 | 0,17 |
| 16 | 100 | 0,17 |
| 17 | 120 | 1,5 |
| 18 | 140 | 6,7 |
| 19 | 160 | 9,1 |
| 20 | 180 | 10,1 |
| 21 | 220 | 14,8 |
| 22 | 280 | 15,0 |

Ainsi, ce tableau confirme les excellents résultats provoqués par l'application du procédé selon l'invention quand le prétraitement est effectué à une température d'au moins 120°C.

**Exemple 6**

Cet exemple permet de mettre en évidence l'influence du temps nécessaire pour porter la suspension du minerai à la température minimale du prétraitement selon l'invention.

Dans ce but, on a utilisé le minerai dont la composition a été décrite dans l'exemple 1.

100 g de ce minerai sec et broyé, passant au tamis de 500 microns ont été introduits dans l'autoclave de 500 millilitres, décrit dans l'exemple 1, avec 300 millilitres d'une solution aqueuse alcaline de recyclage d'un procédé d'attaque dudit minerai, destinée à être utilisée comme solution aqueuse de prétraitement. Cette solution avait la composition suivante:

| | |
|---|---|
| $Na_2CO_3$ | 30,0 g/l |
| $NaHCO_3$ | 23,4 g/l |
| $Na_2SO_4$ | 75,0 g/l |
| NaCl | 10,0 g/l |

et donnait une concentration en $OH^-$ de $0,30.10^{-3}$ g/l.

L'autoclave était placé dans un four électrique et soumis à des oscillations comme cela a été décrit dans les exemples antérieurs.

Cinq essais de montée en température jusqu'à 220°C ont été réalisés, chaque essai étant conduit avec une vitesse de montée en température spécifique, caractérisé par le temps exprimé en minutes de passage à 120°C

$(T_{120°C})$.

A l'issue de cette montée en température à 220°C, l'autoclave était ensuite refroidi à 60°C par immersion dans de l'eau froide.

La suspension était enfin soumise au test de filtration sur filtre Büchner sous vide de 67 kPa (500 millimètres de mercure) afin de mesurer la vitesse de séparation de la phase liquide en $m^3.h^{-1}.m^{-2}$.

Les résultats de ces essais à diverses vitesses de montée en température jusqu'à 220°C ont été réunis dans le tableau V ci-après.

**Tableau V**

| Essai n° | Temps de passage à 120°C ($T_{120°C}$) en mn | Vitesse de séparation de la phase liquide $m^3.h^{-1}.m^{-2}$ |
|---|---|---|
| 23 | 3 | 17,0 |
| 24 | 6 | 13,4 |
| 25 | 14 | 8,7 |
| 26 | 22 | 7,0 |
| 27 | 47 | 0,7 |

Ce tableau révèle d'une manière absolue la nécessité d'atteindre très rapidement la température de prétraitement pour disposer d'une bonne aptitude à la séparation ultérieure des phases liquide et solide.

**Exemple 7**

Cet exemple montre l'influence favorable du séchage du minerai avant l'exécution du prétraitement.

Pour ce faire, on a repris l'essai 26 de l'exemple 6, qui a été pratiqué sur le même minerai que dans l'exemple 1, mais avant que celui-ci ait été séché.

Il renfermait alors 25 % d'eau en pour cent en poids.

Les résultats découlant de ce nouvel essai ont été consignés, en même temps que ceux de l'essai 26, dans le tableau VI ci-après,

**Tableau VI**

| Essai n° | % d'eau en poids du minerai destiné au prétraitement | Temps de passage à 120°C en mn | Vitesse de séparation de la phase liquide en $m^3.h^{-1}.m^{-2}$ |
|---|---|---|---|
| 26 | 1,5 (séché) | 22 | 7,0 |
| 27 | 25 (non séché) | 20 | 4,3 |

Ainsi, il apparaît à travers ce tableau que, s'il n'est pas indispensable de sécher le minerai avant de le soumettre au prétraitement, il est cependant intéressant de le faire, dans le but d'améliorer l'aptitude à la séparation des phases solide et liquide.

**Exemple 8**

cet exemple illustre l'influence favorable sur l'aptitude à la séparation des phases liquide et solide du rapport de la phase liquide à la phase solide (L/S) en mètre cube par tonne.

Six essais ont été réalisés sur le minerai de l'exemple 1.

Pour chacun de ces essais, 40 g de ce minerai sec et broyé, passant au tamis de 500 microns ont été introduits dans l'autoclave de 500 millilitres décrit dans l'exemple 1, avec une solution aqueuse alcaline de recyclage d'un procédé d'attaque dudit minerai, destinée à être utilisée comme solution aqueuse de prétraitement. Cette solution avait la composition suivante:

| | |
|---|---|
| $Na_2CO_3$ | 30,0g/l |
| $NaHCO_3$ | 23,4g/l |
| $Na_2SO_4$ | 75,0g/l |
| NaCl | 10,0g/l |

et donnait une concentration en OH⁻ de $0,30.10^{-3}$ g/l.

Le rapport L/S précédemment défini est spécifique de chaque essai.

Pour chacun de ces essais, le prétraitement a été exécuté dans le même réacteur que celui décrit dans l'exemple 1. La température de prétraitement de 180°C était atteinte en 3 minutes, et maintenue à ce palier pendant 30 minutes.

Toutes les autres conditions de refroidissement, de floculation et du test de séparation, ont été les mêmes que celles décrites dans l'exemple 1.

Le tableau VII ci-après résume simultanément les valeurs L/S pratiquées et les résultats obtenus.

**Tableau VII**

| Essai n° | Rapport L/S en $m^3.T^{-1}$ de minerai | Vitesse de séparation de la phase liquide en $m^3.h^{-1}.m^{-2}$ |
|---|---|---|
| 29 | 1,5 | suspension non fil-trable plastique et stable |
| 30 | 2,0 | 1,2 |
| 31 | 2,5 | 4,3 |
| 32 | 3,0 | 13,2 |
| 33 | 6,0 | 15,0 |
| 34 | 10,0 | 15,2 |

Ainsi, les résultats consignés dans ce tabeleau, montrent l'intrérêt d'effectuer le prétraitement selon l'invention à un rapport L/S préférentiellement d'au moins 2.

**Exemple 9**

Cet exemple concerne et illustre le prétraitement selon le procédé de l'invention, d'un minerai urano-molybdénifère à gangue relativement peu argileuse.

On a, pour cela, fait usage d'un minerai qui avait à sec la composition suivante exprimée en pour cent en poids:

| | |
|---|---|
| U | 0,20 |
| Mo | 0,15 |
| As | 0,04 |
| S | 0,20 |
| Al | 7,0 |
| Ba | 0,035 |
| Ca | 0,1 |
| Fe | 1,1 |
| K | 2,2 |
| Mg | 0,1 |
| Na | 1,0 |
| Si | 35,0 |
| Ti | 0,25 |
| oxygène des oxydes eau de liaison et divers | 52,625 |

Sur ces minerais, on a déterminé un pourcentage d'argile voisin de 10 % en poids.

Deux essais ont été effectués à partir de ce minerai, en utilisant les conditions générales ci-après pour ce qui est de la partie prétraitement.

100 g de ce minerai sec et broyé, passant au tamis de 500 microns ont été introduits dans l'autoclave de 500 millilitres décrit dans l'exemple 1, avec 200 millilitres d'une solution aqueuse alcaline de recyclage d'un procédé d'attaque dudit minerai, destinée à être utilisée comme solution equeuse de prétraitement. Cette solution avait la composition suivante:

| | |
|---|---|
| $Na_2CO_3$ | 50,0 g/l |
| $NaHCO_3$ | 80,0 g/l |
| $Na_2SO_4$ | 38,3 g/l |
| Mo | 11,9 g/l |

et donnait une concentration en $OH^-$ de $2.10^{-4}$ g/l.

L'autoclave était placé dans un four électrique et soumis à une agitation par oscillation.

La suspension était portée à la température choisie de 180°C en 5 minutes, puis maintenue à cette température pendant 30 minutes.

Pour le premier essai (essai 35), la suspension provenant du prétraitement a été rapidement refroidie à la température de 60°C, puis après avoir été aménagée par floculation selon les conditions décrites dans l'exemple 1, elle a été soumise au test de séparation par filtration sur Büchner avec un vide de 67 kPa (500 millimètres de mercure). La vitesse de séparation de la phase liquide était de 3,7 $m^3.h^{-1}.m^{-2}$.

Pour le deuxième essai (essai 36), la suspension après le prétraitement a été portée dans le même réacteur, à 205°C puis maintenue à cette température pendant 60 minutes en présence d'oxygène insufflé à une pression partielle de 5 bars. Cette deuxième phase de traitement poursuivait le but de solubiliser l'uranium et le molybdène valorisables.

La suspension résultante a été refroidie à 60°C, puis floculée et filtrée dans les mêmes conditions que l'essai 35. La vitesse de séparation de la phase liquide était de 3,3 $m^3.h^{-1}.m^{-2}$ tandis que les rendements de solubilisation de l'uranium et du molybdène étaient de 97 % et 95 %.

Enfin, un dernier essai (essai 37) a été réalisé, à partir du même minerai et des mêmes solutions, mais sans appliquer le prétraitement selon l'invention. La suspension dudit minerai a été portée à 205°C en 120 minutes, puis maintenue à cette température pendant 60 minutes.

La suspension ainsi traitée, a été refroidie, floculée et filtrée comme dans l'essai 35.

La vitesse de séparation de la phase liquide était de 0,29 $m^3.h^{-1}.m^{-2}$ tandis que les rendements de solubilisation de l'uranium et du molibdene étaient de 97,3 % et 95,4 %.

Ainsi, il apparaît que ce minerai, bien que, à gangue faiblement argileuse, voit son aptitude à la séparation améliorée, grâce au phénomène mis en évidence pour des minerais à gangue beaucoup plus argileuse.

## Exemple 10

Cet exemple concerne et illustre le prétraitement selon le procédé de l'invention, d'un minerai aurifère à gangue argileuse.

On a, pour cela, fait usage d'un minerai qui avait à sec la composition suivante, exprimée en pour cent en poids:

| | | |
|---|---|---|
| Au | 6 | ppm (parties par million) |
| $SiO_2$ | 57,5 | |
| $TiO_2$ | 1,6 | |
| $Al_2O_3$ | 22,5 | |
| $Fe_2O_3$ | 2,9 | |
| MgO | 0,7 | |
| CaO | 0,55 | |
| $Na_2O$ | 1,0 | |
| $K_2O$ | 1,5 | |
| eau de liaison et divers | 11,75 | |

Sur ce minerai, on a déterminé un pourcentage d'argile voisin de 54 % en poids, essentiellement constituée de kaolinite et de chlorite.

100 g de ce minerai sec, broyé et passant au tamis de 500 microns ont été introduits dans un autoclave cylindrique de 500 millilitres de capacité totale, avec 300 g d'une solution aqueuse alcaline voisine de prétraitement en formant une suspension.

L'autoclave était placé dans un four électrique et soumis à des oscillations dans un plan vertical autour de son axe horizontal transversal.

La suspension était très rapidement portée à la température choisie de 180°C en 3 minutes, et était maintenue à cette température pendant 30 minutes.

Au bout de ce temps, l'autoclave était immergé dans de l'eau froide afin de provoquer un refroidissement rapide de la suspension. Après refroidissement à la température de 60°C, la suspension ainsi prétraitée était soumise à un test de séparation qui consistait à faire passer la suspension sur un filtre Büchner en pratiquant un vide de 67 kPa (500 millimètres de mercure), et à mesurer ainsi la vitesse de séparation de la phase liquide en $m^3.h^{-1}.m^{-2}$.

Afin de vérifier l'efficacité du prétraitement, c'est-à-dire de s'assurer que la gangue argileuse du minerai a

13

**0 148 194**

bien été stabilisée dans un état physique propice à une séparation aisée ultérieure des phases liquide et solide, la phase solide recueillie sur Büchner à la fin du prétraitement était soumise à un test de dégradation en présence d'une solution aqueuse alcaline.

Le test de dégradation consistait à introduire le gâteau provenant du prétraitement dans un réacteur cylindro-hémisphérique en acier inoxydable avec une solution aqueuse de dégradation identique à celle du prétraitement selon un rapport des phases liquide et solide exprimées en $m^3/t$ égal à 3. Le réacteur, qui avait une capacité de 2 litres, était muni d'une turbine à axe vertical, comportant 3 pales verticales, tournant à 375 t/mn.

Le milieu réactionnel était alors porté à la température de 60°C, puis maintenu à cette température pendant une heure, toutes ces opérations s'effectuant sous violente agitation.

A l'issue de ce traitement de dégradation, la suspension était soumise à nouveau à un test de séparation sur le filtre Büchner en pratiquant encore un vide de 67 kPa (500 millimètres de mercure), en mesurant la vitesse de séparation de la phase liquide en $m^3.h^{-1}.m^{-2}$.

Deux essais ont été réalisés: l'un (essai 37) selon le protocole précité de prétraitement et de dégradation, l'autre (essai 38) selon le seul protocole de dégradation.

L'essai 37 était réalisé en faisant usage d'une solution aqueuse de prétraitement contenant 0,2 g/l de NaCN et 2 g/l de $Ca(OH)_2$ donnant une concentration de $10^{-2}$ g/l de $OH^-$.

L'essai 38 était effectué en utilisant la même solution aqueuse que l'essai 37.

Les suspensions résultant du prétraitement et/ou du test de dégradation dans chacun des essais précités, ont été adjuvantées au moyen d'un agent de floculation.

Dans les essais 37 et 38, chaque suspension a reçu sous agitation 20 $cm^3$ d'une solution à 0,5 g/l de Floerger FA 10, préparée à partir d'une solution aqueuse à 2,5 g/l.

Les vitesses de filtration ont été consignées dans le tableau VIII ci-après.

**Tableau VIII**

| Essai n° | Concentration en $OH^-$ g/l de la solution de pré-traitement et/ou dégradation | Vitesse de filtration en $m^3.h^{-1}.m^{-2}$ | |
|---|---|---|---|
| | | après prétraitement | après test de dégradation |
| 37 | $10^{-2}$ | 3,8 | 3,2 |
| 38 | $10^{-2}$ | - | 0,07 |

Ce tableau révèle que, en l'absence du prétraitement selon l'invention, l'aptitude à la séparation des phases liquide et solide est très faible. Par contre, cette aptitude devient excellente quand le prétraitement est réalisé.

**Exemple 11**

Cet exemple illustre le prétraitement selon le procédé de l'invention d'un minerai formé d'une latérite nickelifère à gangue argileuse.

On a, pour cela, fait usage d'un minerai qui avait à sec la composition suivante exprimée en pour cent en poids:

| | |
|---|---|
| Ni | 1,5 |
| Co | 0,3 |
| $SiO_2$ | 53,9 |
| $Al_2O_3$ | 11,8 |
| $Fe_2O_3$ | 26,0 |
| eau de liaison et divers | 6,5 |

Sur ce minerai, on a déterminé un pourcentage d'argile voisin de 30 % en poids (kaolinite).

Six essais ont été effectués:

Deux premiers essais (39 et 40) ont été effectués à partir de ce minerai en utilisant les conditions générales de l'exemple 10, mais avec une solution de pretraitement et de dégradation constituée par une solution aqueuse d'ammoniaque.

Deux autres essais (41 et 42) ont également été réalisés à partir du même minerai, en utilisant les conditions générales de l'exemple 10.

L'essai 39 était effectué en utilisant comme solution de prétraitement et de dégradation, une solution aqueuse à 50 g/l d'ammoniaque, représentant une concentration en $OH^-$ de $4.10^{-2}$ g/l.

L'essai 40 était réalisé par usage d'une solution aqueuse de dégradation sans pretraitement, ayant une composition en ammoniaque identique à celle de l'essai 39.

L'essai 41 mettait en oeuvre d'abord une solution aqueuse alcaline de prétraitement saturée en $Ca(OH)_2$ donnant une concentration en OH- de $5,4.10^{-1}$ g/l, puis une solution de dégradation acide à 60°C maintenue à pH compris entre 2 et 3 par addition de $H_2SO_4$.

L'essai 42 mettait en oeuvre une solution de dégradation acide identique à celle de l'essai 41 sans pratiquer le prétraitement selon l'invention,

L'essai 43 était réalisé d'abord au moyen d'une solution aqueuse alcaline de prétraitement saturée en $Ca(OH)_2$ de même concentration que pour l'essai 41, suivi d'un test de dégradation effectué dans un même autoclave que celui décrit dans l'exemple 10, travaillant à une température de 240°C en milieu initialement acide (60 kg $H_2SO_4$/tonne de minerai) avec L/S = 3 (en m3/t).

L'essai 44 était effectué en utilisant une solution acide de dégradation identique à l'essai 43.

Les résultats expérimentaux ont été rassemblés dans le tableau IX ci-après,

**Tableau IX**

| | | | | Prétraitement | | | | | Dégradation | | | |
|---|---|---|---|---|---|---|---|---|---|---|---|---|
| Essai n° | Nature solution | L/S | (OH-) en g/l | Durée en mn | Tempéra-ture en °C | Vitesse de filtration en $m^3.h^{-1}.m^{-2}$ | Nature solution | L/S | Durée en mn | Tempéra-ture en °C | Vitesse de filtration $m^3.h^{-1}.m^{-2}$ |
| 39 | $NH_3$ | 3 | $4.10^{-2}$ | 30 | 180 | 3,1 | $NH_3$ | 3 | 60 | 60 | 2,9 |
| 40 | - | - | - | - | - | - | $NH_3$ | 3 | 60 | 60 | 0,1 |
| 41 | $Ca(OH)_2$ | 3 | $5,4.10^{-1}$ | 30 | 180 | 5,3 | $H_2SO_4$ pH 2-3 | 3 | 60 | 60 | 4,8 |
| 42 | - | - | - | - | - | - | $H_2SO_4$ pH 2-3 | 3 | 60 | 60 | 0,2 |
| 43 | $Ca(OH)_2$ | 3 | $5,4.10^{-1}$ | 30 | 180 | 5,1 | $H_2SO_4$ 60 kg/t | 3 | 180 | 240 | 3,5 |
| 44 | - | - | - | - | - | - | $H_2SO_4$ 60 kg/t | 3 | 180 | 240 | 0,15 |

Les résultats consignés dans le tableau précité montrent l'intérêt d'effectuer un prétraitement des minerais de nickel-cobalt à gangue argileuse, que les traitements ultérieurs, par exemple une attaque dudit minerai soient effectués en milieu acide ou alcalin à basse ou haute température.

### Revendications

1. Procédé de prétraitement à haute température au moyen d'une solution aqueuse dite de prétraitement, de minerais broyés contenant au moins un élément métallique valorisable dont la gangue contient des composés argileux susceptibles de former lors de l'attaque valorisante du minerai une suspension plastique stable en présence d'eau rendant pratiquement impossible la séparation ultérieure des phases liquide et solide en raison de son caractère infiltrable et/ou indécantable, caractérisé en ce que, pour provoquer une stabilisation de la gangue argileuse avant l'attaque valorisante du minerai et obtenir après l'attaque des séparations aisées des phases liquide et solide, le minerai, dont la granulométrie est au plus égale à la maille de libération du ou des métaux à valoriser et avant d'être soumis à l'attaque valorisante, est mis au contact avec une solution aqueuse de prétraitement contenant au moins $2.10^{-5}$ g/l d'ions OH- puis le milieu formé est immédiatement porté à la température minimale de prétraitement d'au moins 120°C en un temps d'au plus 30 minutes compté à partir de la mise en contact du minerai avec la solution aqueuse de prétraitement.

2. Procédé de prétraitement à haute température selon la revendication 1, caractérisé en ce que le minerai est soumis à un séchage préalable à sa mise à la maille de libération du ou des éléments métalliques à valoriser.

3. Procédé de prétraitement à haute température selon la revendication 1, caractérésé en ce que le minerai est soumis à un séchage simultanénent à sa mise à la maille de libération du ou des éléments métalliques à valoriser.

4. Procédé de prétraitement à haute température selon l'une quelconque des revendications 1 à 3, caractérisé en ce que la mise à la maille de libération du ou des éléments métalliques à valoriser s'effectue par broyage sans ajout d'eau.

5. Procédé de prétraitement à haute température selon l'une quelconque des revendications 1 à 4, caractérisé en ce que la concentration en ions OH⁻ de la solution aqueuse de prétraitement peut varier entre $2.10^{-5}$ g/l et 20 g/l, mais preférentiellement entre $2.10^{-4}$ g/l et 12 g/l.

6. Procédé de prétraitement à haute température selon l'une quelconque des revendications 1 à 5, caractérisé en ce que le rapport du volume de la phase liquide exprimée en mètre cube au poids de la phase solide exprimée en tonne de minerai est toujours supérieur à 1 et est préférentiellement compris entre 2 et 10.

7. Procédé de prétraitement à haute température selon l'une quelconque des revendications 1 à 6, caractérisé en ce que la température minimale de prétraitement est choisie dans l'intervalle de 140°C à 300°C.

8. Procédé de prétraitement à haute température selon l'une quelconque des revendications 1 à 7, caractérisé en ce que le temps nécessaire à la montée en température jusqu'à la température minimale de prétraitement est compris entre l'instantané et au plus 20 minutes.

9. Procédé de prétraitement à haute température selon l'une quelconque des revendications 1 à 8, caractérisé en ce que le milieu ayant atteint la température minimale de prétraitement est porté à une température choisie au-dessus de le température minimale de prétraitement.

10. Procédé de prétraitement à haute température selon l'une quelconque des revendications 1 à 9, caractérisé en ce que le milieu ayant atteint au moins la température minimale de prétraitement est maintenu à cette température choisie pendant un temps compris entre 1 et 60 minutes.

11. Procédé de prétraitement à haute température selon l'une quelconque des revendications 1 à 10, caractérisé en ce que, pendant la durée du traitement, le milieu aqueux résultant de la mise en contact du minerai avec la solution aqueuse de prétraitement est soumis à une agitation au moins suffisante pour s'opposer à la décantation des plus gros grains de la phase solide.

12. Procédé de prétraitement à haute température selon l'une quelconque des revendications 1 à 11, caractérise en ce que, un agent d'oxydation est introduit dans le milieu de prétraitement.

13. Procédé de prétraitement à haute température selon la revendication 12, caractérisé en ce que l'agent d'oxydation appartient au groupe constitué par l'air, l'air enrichi en oxygène, l'oxygène seul, l'ozone, l'eau oxygénée, le permanganate de potassium, les persulfates.

14. Procédé de prétraitement à haute température selon l'une quelconque des revendications 12 et 13, caractérisé en ce que quand l'agent d'oxydation est gazeux, la pression partielle d'oxygène dans le réacteur est comprise entre 0,1 et 20 bars et préférentiellement entre 5 et 15 bars.

15. Procédé de prétraitement à haute température selon l'une quelconque des revendications 1 à 14, caractérisé en ce que du gaz $CO_2$ est insufflé dans le milieu réactionnel pendant que s'effectue le prétraitement.

**Patentansprüche**

1. Verfahren zur Vorbehandlung von zerkleinerten Erzen bei hoher Temperatur mittels einer sog. wässerigen Vorbehandlungslösung, welche Erze wenigstens ein verwertbares metallisches Element enthalten und deren Gangart tonartige Verbindungen enthält, die beim Auswertungsaufschluß des Erzes zur Bildung einer plastischen stabilen Suspension in Gegenwart von Wasser neigen, die die spätere Trennung der flüssigen und festen Phasen wegen ihres unfiltrierbaren und/oder undekantierbaren Charakters praktisch unmöglich macht, dadurch gekennzeichnet, daß zur Hervorrufung einer Stabilisierung der tonartigen Gangart vor dem Auswertungsaufschluß des Erzes und zum Erhalten leichter Trennungen der flüssigen und festen Phasen nach dem Aufschluß das Erz, dessen Korngröße höchstens gleich der Freisetzungsabmessung des oder der zu verwertenden Metalle ist, vor dem Auswertungsaufschluß iin Kontakt mit einer wenigstens $2.10^{-5}$ g/l OH⁻-lonen enthaltenden wässerigen Vorbehandlungslösung gebracht wird und dann das gebildete Medium unverzüglich auf die minimale Vorbehandlungstemperatur von wenigstens 120°C in einer ab Beginn der Kontaktierung des Erzes mit der Vorbehandlungslösung gerechneten Zeit von höchstens 30 Minuten gebracht wird.

2. Vorbehandlungsverfahren bei hoher Temperatur nach dem Anspruch 1, dadurch gekennzeichnet, daß das Erz vor seinem Bringen auf die Freisetzungsabmessung des oder der zu verwertenden Metalle einer Trocknung unterworfen wird.

3. Vorbehandlungsverfahren bei hoher Temperatur nach dem Anspruch 1, dadurch gekennzeichnet, daß das Erz gleichzeitig mit seinem Bringen auf die Freisetzungsabmessung des oder der zu verwertenden Metalle einer Trocknung unterworfen wird.

4. Vorbehandlungsverfahren bei hoher Temperatur nach irgendeinem der Ansprüche 1 bis 3, dadurch gekennzeichnet, daß das Bringen auf die Freisetzungsabmessung des oder der zu verwertenden Metalle durch Zerkleinerung ohne Wasserzusatz erfolgt.

5. Vorbehandlungsverfahren bei hoher Temperatur nach irgendeinem der Ansprüche 1 bis 4, dadurch gekennzeichnet,

daß die Konzentration der wässerigen Vorbehandlungslosung an OH⁻-Ionen zwischen $2.10^{-5}$ g/l und 20 g/l, jedoch vorzugsweise zwischen $2.10^{-4}$ g/l und 12 g/l variieren kann.

6. Vorbehandlungsverfahren bei hoher Temperatur nach irgendeinem der Ansprüche 1 bis 5, dadurch gekennzeichnet,
daß das Verhältnis des Volumens der flüssigen Phase, in $m^3$ ausgedrückt, zum Gewicht der festen Phase, in t Erz ausgedrückt, stets über 1 ist und vorzugsweise im Bereich von 2 bis 10 liegt.

7. Vorbehandlungsverfahren bei hoher Temperatur nach irgendeinem der Ansprüche 1 bis 6, dadurch gekennzeichnet,
daß die minimale Vorbehandlungstemperatur im Bereich von 140° C bis 300° C gewählt wird.

8. Vorbehandlungsverfahren bei hoher Temperatur nach irgendeinem der Ansprüche 1 bis 7, dadurch gekennzeichnet,
daß die zum Temperaturanstieg bis zur minimalen Vorbehandlungstemperatur erforderliche Zeit zwischen augenblicklich und höchstens 20 Minuten liegt.

9. Vorbehandlungsverfahren bei hoher Temperatur nach irgendeinem der Ansprüche 1 bis 3, dadurch gekennzeichnet,
daß das Medium, das die minimale Vorbehandlungstemperatur erreicht hat, auf eine oberhalb der minimalen Vorbehandlungstemperatur gewählte Temperatur gebracht wird.

10. Vorbehandlungsverfahren bei hoher Temperatur nach irgendeinem der Ansprüche 1 bis 9, dadurch gekennzeichnet,
daß das Medium, das wenigstens die minimale Vorbehandlungstemperatur erreicht hat, bei dieser gewählten Temperatur während einer Zeit von 1 bis 60 Minuten gehalten wird.

11. Vorbehandlungsverfahren bei hoher Temperatur nach irgendeinem der Ansprüche 1 bis 10, dadurch gekennzeichnet,
daß während der Dauer der Behandlung das aus der Kontaktierung des Erzes mit der wässerigen Vorbehandlungslösung resultierende wässerige Medium einem Rühren unterworfen wird, das mindestens zur Unterbindung der Dekantation der gröbsten Körner der festen Phase ausreicht.

12. Vorbehandlungsverfahren bei hoher Temperatur nach irgendeinem der Ansprüche 1 bis 11, dadurch gekennzeichnet,
daß ein Oxidationsmittel in das Vorbehandlungsmedium eingeführt wird.

13. Vorbehandlungsverfahren bei hoher Temperatur nach dem Anspruch 12, dadurch gekennzeichnet,
daß das Oxidationsmittel zur Gruppe gehört, die durch Luft, an Sauerstoff angereicherte Luft, Sauerstoff allein, Ozon, sauerstoffhaltiges Wasser, Kaliumpermanganat und die Persulfate gebildet ist.

14. Vorbehandlungsverfahren bei hoher Temperatur nach irgendeinem der Ansprüche 12 und 13, dadurch gekennzeichnet,
daß, wenn das Oxidationsmittel gasförmig ist, der Sauerstoffpartialdruck im Reaktionsgefäß im Bereich von 0,1 bis 20 bar und vorzugsweise im Bereich von 5 bis 15 bar liegt.

15. Vorbehandlungsverfahren bei hoher Temperatur nach irgendeinem der Ansprüche 1 bis 14, dadurch gekennzeichnet,
daß $CO_2$-Gas in das Reaktionsmedium eingeblasen wird, während die Vorbehandlung erfolgt.


## Claims

1. A process for high-temperature pretreatment by means of an agueous solution referred to as the pretreatment solution, of crushed ores containing at least one usable metal element, whose gangue contains argillaceous compounds which, in the attack operation for making use of the ore, are capable of forming a stable plastic suspension in the presence of water, which makes it virtually impossible subseguently to separate the liquid and solid phases by virtue of its character being such that it cannot be subjected to filtration and/or settlement, characterised in that, to cause stabilisation of the argillaceous gangue before the operation of subjecting the ore to attack and to produce easy separation of the liquid and solid phases after the attack operation, the ore, the granulometry of which is at most equal to the liberation sieve mesh size of the metal or metals to be put into useful form, and before being subjected to the attack operation for making use of the ore, is brought into contact with an aqueous pretreatment solution containing at least $2.10^{-5}$ g/l of OH⁻ ions, and then the medium formed is immediately raised to the minimum pretreatment temperature of at least 120° C in a period of time of at most 30 minutes reckoned from the time at which the ore is brought into contact with the agueous pretreatment solution.

2. A high-temperature pretreatment process according to claim 1 characterised in that the ore is subjected to a drying operation prior to its being set to the liberation mesh size of the metal element or elements which are to be put to use.

3. A high-temperature pretreatment process according to claim 1 characterised in that the ore is subjected to a drying operation simultaneously with its being set to the liberation mesh size of the metal element or elements which are to be put to use.

4. A high-temperature pretreatment process according to any one of claims 1 to 3 characterised in that the

17

operation of setting the ore to the liberation mesh size of said metal element or elements is effected by crushing without adding water.

5. A high-temperature pretreatment process according to any one of claims 1 to 4 characterised in that the concentration in respest of OH⁻ ions of the aqueous pretreatment solution may vary between $2.10^{-5}$ g/l and 20 g/l, but preferably between $2.10^{-4}$ g/l and 12 g/l.

6. A high-temperature pretreatment process according to any one of claims 1 to 5 characterised in that the ratio of the volume of of the liquid phase expressed in cubic metres to the weight of the solid phase expressed in tonnes of ore is always higher than 1 and is preferably between 2 and 10.

7. A high-temperature pretreatment process according to any one of claims 1 to 6 characterised in that the minimum pretreatment temperature is selected in the range of from 140°C to 300°C.

8. A high-temperature pretreatment process according to any one of claims 1 to 7 characterised in that the time reguired for the increase in temperature to the minimum pretreatment temperature is between instantaneous and at most 20 minutes.

9. A high-temperature pretreatment process according to any one of claims 1 to 8 characterised in that the medium, having reached the minimum pretreatment temperature, is set to a selected temperature above the minimum pretreatment temperature.

10. A high-temperature pretreatment process according to any one of claims 1 to 9 characterised in that the medium, having reached at least the minimum pretreatment temperature, is held at that selected temperature for a period of time of between 1 and 60 minutes.

11. A high-temperature pretreatment process according to any one of claims 1 to 10 characterised in that, for the duration of the treatment, the agueous medium resulting from contact of the ore with the aqueous pretreatment solution is subjected to an agitation effect which is at least sufficient to resist settlement of the largest grains of the solid phase.

12. A high-temperature pretreatment process according to any one of claims 1 to 11 characterised in that an oxidation agent is introduced into the pretreatment medium.

13. A high-temperature pretreatment process according to claim 12 characterised in that the oxidation agent belongs to the group formed by air, oxygen-enriched air, oxygen alone, ozone, hydrogen peroxide, potassium permanganate and persulphates.

14. A high-temperature pretreatment process according to either one of claims 12 and 13 characterised in that, when the oxidation agent is gaseous, the oxygen partial pressure in the reaction vessel is between 0.1 and 20 bars and preferably between 5 and 15 bars.

15. A high-temperature pretreatment process according to any one of claims 1 to 14 characterised in that $CO_2$ gas is bloun into the reaction medium while the pretreatment is carried out.